(19) Europäisches Patentamt / European Patent Office / Office européen des brevets

(11) **EP 2 327 670 A1**

(12) **EUROPEAN PATENT APPLICATION**

(43) Date of publication:
**01.06.2011 Bulletin 2011/22**

(51) Int Cl.:
*C04B 22/06* (2006.01)    *C04B 24/12* (2006.01)
*C04B 40/00* (2006.01)    *C01F 7/00* (2006.01)

(21) Application number: **09177115.4**

(22) Date of filing: **25.11.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Nederlandse Organisatie voor Toegepast -Natuurwetenschappelijk Onderzoek TNO 2628 VK Delft (NL)**

(72) Inventors:
• **Fischer, Hartmut Rudolf 5731 TP Mierlo (NL)**

• **Adan, Olaf 2628 VK Delft (NL)**
• **Iloris Cormano, Jose Manuel E-46980 Valencia (ES)**
• **Lopéz Tendero, Maria Jose E-46980 Valencia (ES)**

(74) Representative: **Hatzmann, Martin Vereenigde Johan de Wittlaan 7 2517 JR Den Haag (NL)**

(54) **Corrosion inhibition system for reinforced concrete**

(57)    The invention is directed to a corrosion inhibition system for reinforced concrete, to reinforced concrete comprising said corrosion inhibition system, and to a process for preparing said reinforced concrete, and to the use of said reinforced concrete.

In accordance with the invention, a corrosion inhibition system for concrete reinforced with a corrosion sensitive reinforcement is provided, which system comprises layered double hydroxide intercalated with a compound represented by the following formula (I):

$$Y—R—COO-    (I)$$

and/or protonated forms thereof, wherein
Y is $NH_2$ or COO-
R is an optionally substituted aromatic, aliphatic, or cycloaliphatic moiety having 5-18 carbon atoms.

EP 2 327 670 A1

**Description**

The invention is directed to a corrosion inhibition system for reinforced concrete, to reinforced concrete comprising said corrosion inhibition system, to a process for preparing said reinforced concrete, and to the use of said reinforced concrete.

Due to the high costs associated with corrosion problems in reinforced concrete structures, it is very important to develop preventive methods against corrosion processes. In the case of structures exposed to sea environments or in areas where defrost salts are used, the problem of corrosion is particularly present. The main source of corrosion in these cases is the diffusion of chloride ions through the porous concrete structure. In concrete, the high concentration of calcium hydroxide together with relatively low concentration alkaline elements confers high alkalinity, typically a pH value of between 12 and 13. Since the first hours of concrete curing period, the high alkalinity leads to the formation of a first surface layer on the reinforcement, which is strongly attached and it is formed by dense spinel-like structure with epitaxial orientation. On top of this layer, another external passivation layer is formed (typically ferric hydroxide in case of steel reinforcement). This layer protects the reinforcement from corrosion by blocking direct contact of corrosive compounds with the reinforcement material..

However, when reinforced concrete is exposed to an environment rich in chloride ions (for instance induced by sea salts, de-icing salts, *etc.*), the chloride ions slowly penetrate the concrete through the porous structure and accumulate. When a sufficiently high concentration of chloride ions is reached, the chloride ions can promote corrosion of the embedded reinforcement in the presence of oxygen and moisture at the reinforcement-concrete interface by damaging the passivation layer. For example, the use of de-icing salts on roadways is probably one of the primary causes of premature failure of reinforced concrete bridge decks, roadways, and parking garages.

In order to avoid such corrosion, reinforced concrete may benefit from the use of epoxy-coated, hot dip galvanised or stainless steel reinforcement material. Another, cheaper way of protecting reinforcement material is by coating the material with zinc phosphate. Zinc phosphate can slowly react with the corroding agent (e.g. alkali), thereby forming a stable hydroxyapatite layer. Further measures of corrosion protection include the use of penetrating sealants. These are applied some time after curing of the concrete. Sealants include paint, plastic foams, films and aluminium foil, felts or fabric mats sealed with tar, and layers of bentonite clay.

Nowadays, both corrosion inhibitors commonly employed (organic and inorganic ions) and barrier solutions (such as polymeric coating of the reinforcement) can protect the structure for a limited period of time. Most of the inhibitors used are soluble and/or are drained out by lixiviation. As regards the protective coating resins, even the most resistant ones — such as epoxy resins — have an accessible porosity and hence water uptake and are unable to resist highly alkaline environments for a long time.

Thus, although these protective measures have mitigated the corrosion of reinforced concrete to some extent, there remains a need for alternative ways of protection reinforced concrete from corrosion, particularly when the concrete is to be applied in an environment that is rich in chloride ions.

Moreover, it would be desirable to have a smart preventive system that is able to detect chloride ions and respond to them in order to eliminate the problem source before it starts (concept of corrosion immunisation).

In this respect, US-A-2007/0 022 916 describes a controlled release formulation for a cement-based composition, in which an admixture for the cement-based composition (such as a corrosion inhibitor) is intercalated in a layered inorganic material. According to this document de-intercalation or release of the admixture can be actively programmed through controlled chemistry involving, for example, type of layered inorganic material, charge density, concentration, and/or pH. No specific corrosion inhibitors are mentioned.

Furthermore, CN-A-1 948 207, JP-A-4 154 648, and JP-A-9 142 903 describe corrosion inhibition systems based on hydrotalcites that are directly incorporated in the mortar mix and/or concrete. These publications all refer to hydrotalcites intercalated with inorganic corrosion inhibitors. Such inorganic corrosion inhibitors are, however, very mobile and leach quickly. In addition, they are environmentally unfriendly and/or partly poisonous.

The invention is based on the insight that the use of specific corrosion inhibitors intercalated in a layered double hydroxide is particularly advantageous in view of their limited leaching, their ease of degradation when exposed to the environment and particularly in view of their efficiency as corrosion inhibitor.

Accordingly, in a first aspect the invention is directed to a corrosion inhibition system for concrete reinforced with a corrosion sensitive reinforcement, comprising layered double hydroxide intercalated with a compound represented by the following formula (I):

$$Y—R—COO- \qquad (I)$$

and/or protonated forms thereof, wherein
Y is $NH_2$ or COO-; and
R is an optionally substituted aromatic, aliphatic, or cycloaliphatic moiety having 5-18 carbon atoms.

The corrosion inhibition system of the invention is based on layered double hydroxide particles that are intercalated with organic anions capable of effectively protecting the reinforced concrete against corrosion. The intercalated layered double hydroxides can advantageously be applied directly as an aqueous emulsion, in the form of a spray, on the corrosion sensitive reinforcement material that is employed in the concrete, or alternatively be mixed in the concrete mortar. There is no need for using a paint or polymeric carrier. The intercalated layered double hydroxides are able to free the corrosion protective organic anions as a response to the increase of the chloride ion concentration in the aqueous media close to the reinforcing steel. An ion exchange reaction can take place within the bulk of the layered double hydroxide, thereby releasing the corrosion protective organic anions and capturing the chloride ions. Accordingly, the corrosion inhibition system of the invention is able to work as a smart storage of active corrosion protective agent. Advantageously, the corrosion inhibition system o the invention keeps the chloride ion concentration below the limit that is considered dangerous due to the damage induced on the passivated oxide layer of the steel, preferably during the concrete service life.

The present invention is based on the use of layered double hydroxides, which are capable of ion exchange. In general ion exchanger compounds comprise a host structure with one or more guest species that can be exchanged by other species of the surroundings. In the case of layered double hydroxides, the host is formed by hydroxide layers of divalent metallic cations that are partly substituted by trivalent cations, therefore having a net positive charge. Electrical neutrality is obtained by anions that are present between the layers, which are the guest or exchangeable species.

The host has open channels that can accommodate anions and solvent molecules. It can also incorporate cations in such channels in order to maintain electrical neutrality of the solid. The ion exchange is illustrated by the equation below. Initially, the system LDH-*Inh* has inhibitor anions *(Inh)* in the channels. In contact with an electrolyte that contains e.g. chloride anions, the exchange reaction is ruled by an equilibrium constant and an exchange isotherm, which can be measured:

$$\text{LDH-}Inh + \text{NaCl}_{(aq)} \rightarrow \text{LDH-Cl} + \text{Na}Inh_{(aq)} + \text{Na}Inh_{(aq)}$$

Herein, LDH-*Inh* is the synergistic corrosion active system consisting of chloride scavenger (the layered double hydroxide) and active corrosion protective agent (the corrosion inhibitor according to formula (I)), and LDH-Cl is the layered double hydroxide with chloride in the layered double hydroxide channels.

The layered double hydroxide is preferably identified by the general formula

$$M^{2+}{}_{1-x} M^{3+}{}_x (OH)_2 \left( \left( A^{n-} \right)_m \right)_{\frac{x}{n \cdot m}} \cdot y\, H_2O\,,$$

wherein $M^{2+}$ represents one or more divalent metal cations; $M^{3+}$ represents one or more trivalent metal cations; $\left( \left( A^{n-} \right)_m \right)$ $\left( \left( A^{n-} \right)_m \right)_{\frac{x}{n \cdot m}}$ is an interlayer anion with valence n ; n is an integer in the range of 1-4; m is an integer in the range of 1-5000. In case m is two or more, the anion is a polyanion having multiple repeating units $A^{n-}$. x is a value in the range of 0.1-0.5; and y is a is an integer in the range of 0-20. The anion may a polyanion, having multiple repeating units $A^{n-}$.

In this formula $M^{2+}$ is preferably $Ni^{2+}$, $Zn^{2+}$, $Mn^{2+}$, $Ca^{2+}$, $Mg^{2+}$, $Fe^{2+}$, or mixtures thereof. Especially preferred divalent metal cations are $Mg^{2+}$, $Ca^{2+}$, $Fe^{2+}$, and $Zn^{2+}$. $M^{3+}$ is preferably $Al^{3+}$, $Ga^{3+}$, $Fe^{3+}$, $Cr^{3+}$, or mixtures thereof. Especially preferred trivalent metal cations are $Al^{3+}$ and $Fe^{3+}$.

The value x is preferably in a range of 0.1-0.5, more preferably, x is in the range of 0.17-0.33. The molar ratio between $M^{2+}$ and $M^{3+}$ can be between 2 and 4, and is preferably about 2. $\left( \left( A^{n-} \right)_m \right)_{\frac{x}{n \cdot m}}$ is an interlayer anion that compensates for excess positive charge induced by $M^{3+}$ substitution of $M^{2+}$. The isomorphic substitution of $Mg^{2+}$ with $Al^{3+}$ gives rise to positively charged layers, and electrical neutrality is given by the anions with relatively high mobility. The anions are allocated in non-ordered interlayer regions that have water molecules, which allow the ion exchange.

$\left( \left( A^{n-} \right)_m \right)_{\frac{x}{n \cdot m}}$ can be small or bulk organic or inorganic molecules or layered materials. The anion $\left( \left( A^{n-} \right)_m \right)_{\frac{x}{n \cdot m}}$ has a direct influence on the basal spacing between the layers of the layered double hydroxide. For the ease of intercalation and ion exchange, it is preferred that $\left( \left( A^{n-} \right)_m \right)_{\frac{x}{n \cdot m}}$ is an inorganic anion, more preferably selected from the group consisting of $NO_3^-$, $Cl^-$, $CO_3^{2-}$, $SO_4^{2-}$, isopolyanions, heteropolyanions, carboxylates or mixtures thereof. It is preferred that *n* is an integer in the range of 1-4.

In a preferred embodiment, the layered double hydroxide is a hydrotalcite, more preferably a hydrotalcite having

Mg(OH)$_2$ brucite layers wherein part of the Mg$^{2+}$ ions are substituted with Al$^{3+}$ ions.

The layered double hydroxides are intercalated with compounds according to general formula (I). It is preferred that R in formula (I) is (CH$_2$)$_n$ wherein n is an integer in the range of 5-18, preferably 5-12. Examples of such compounds include 4-aminobenzoate and 11-aminoundecanoate. Without wishing to be bound by theory, the inventors believe that the longer aliphatic chains result in somewhat lower water solubility, which in turn provides resistance against quick leaching.

In a preferred embodiment, Y in formula (I) is NH$_2$.

Layered double hydroxides that are intercalated with these compounds can be prepared using a co-precipitation method at controlled pH, and under inert atmosphere to avoid the contamination with carbonate ions. The thus prepared layered double hydroxides can be intercalated with compounds according to general formula (I) at a level ranging between 1.5 and 4.5 meq/g.

In a further aspect, the invention is directed to reinforced concrete comprising a corrosion sensitive reinforcement and a corrosion inhibition system according to the invention. Such reinforced concrete has particularly good protection against corrosion, since the release of the corrosion protective agent acts synergistically with the scavenging of the corrosion promoting chloride ions. The corrosion sensitive reinforcement is usually steel, typically in the form of steel plates, steel bars, steel fibres, steel rods, steel fabric, steel wire, welted steel wire netting, welted steel fabric, and/or mesh steel reinforcement.

In yet a further aspect, the invention is directed to a process for preparing reinforced concrete comprising:

(i) applying the corrosion inhibition system according to the invention onto a corrosion sensitive reinforcement and reinforcing a concrete mortar with said reinforcement; and/or
(ii) mixing the corrosion inhibition system according to the invention with a concrete mortar and reinforcing said concrete mortar with reinforcement;

and

- curing the reinforced concrete mortar.

The intercalated layered double hydroxide can be applied onto the corrosion sensitive reinforcement by spraying, coating, dipping, or the like. To this end, for instance, an aqueous emulsion of the intercalated layered double hydroxide can be prepared. Alternatively or additionally, the intercalated layered double hydroxide can be directly admixed with the concrete mortar components. Advantageously, the invention does not require a polymeric carrier, which in the prior art was essential for applying the corrosion inhibition system and protected prior art corrosion inhibitors from quick leaching.

When admixed with the concrete mortar, the intercalated layered double hydroxide can be applied in a concentration of 0.5-20 wt.% of intercalated layered double hydroxide based on dry weight of the concrete mortar, preferably 1-5 wt.%. Usually the concrete mortar has a water/cement ratio in the range of 0.2-0.7.

In yet a further aspect the invention is directed to the use of the reinforced concrete according to the invention in structures exposed to seawater, or in structures exposed to de-icing salts. Such use is particularly advantageous, because in such structures the reinforced concrete is usually exposed to exceptionally high chloride ion concentrations. The invention provides a smart and solution in reducing or preventing corrosion of the corrosion sensitive reinforcement under such conditions.

The invention will now be further illustrated by means of the following Examples which are not intended to limit the invention in any way.

Examples

Release of the corrosion inhibitor by means of ion exchange with chloride anions was confirmed by the inventors using volumetric titrations, X-ray diffraction techniques (diffractograms showing characteristic signals of hydrotalcites with chloride), infrared spectroscopy, and X-ray microanalysis by scanning electron microscopy.

Electrochemical measurements were carried out by the Open Circuit Potential (OCP) according to the ASTM C 876 standard test method for half-cell potentials, measuring the OCP versus a saturated calomel electrode. According to this norm, potentials more positive than -120 mV indicate that corrosion process will not occur in the reinforcement bars with a probability higher than 90 %. A potential between -120 mV and -270 mV means that the corrosion probability is uncertain; while a potential more negative than -270 mV corresponds to a corrosion process probability higher than 90 %.

The following layered double hydroxides were prepared by a controlled pH co-precipitation method of metal salts at moderate temperature.

*Sample A: $Ca_2Al(OH)_6[NH_2(CH_2)_{10}COO] \cdot 2 H_2O$*

10.60 g of $Ca(NO_3)_2$ and 8.42 g $Al(NO_3)_3$ were dissolved in decarbonated water. This solution was added drop wise into a 0.1 M solution of $NH_2(CH_2)_{10}COOH$ (9.03 g) under vigorous stirring. During the synthesis the temperature was maintained at 70 °C and pH at 11.50 ± 0.2 adjusted by simultaneous drop wise addition of 2 M NaOH solution. The addition of both solutions took about 1 h. The resulting suspension was then maintained at 70 °C, 1.5 hours, and then 18 hours with stirring without temperature. The product was filtered off, washed two times with decarbonated and distilled water and finally with ethanol. The filtration cake material was then dried 12 hours at 100 °C.

*Sample B: $Zn_2Al(OH)_6[NH_2(C_6H_4)COO] . 2 H_2O$*

13.74 g of $Zn(NO_3)_2$ and 8.67 g of $Al(NO_3)_3$ were dissolved in decarbonated water. This solution was added drop wise into a 0.1 M solution of $NH_2(C_6H_4)COOH$ (6.34 g) under vigorous stirring. During the synthesis the temperature was maintained at 60 °C and pH at 10.00 ± 0.2 adjusted by simultaneous drop wise addition of 2 M NaOH solution. The addition of both solutions took about 1 h. The resulting suspension was then maintained at 70 °C, 1.5 hours, and then 18 hours with stirring without temperature. The product was filtered off, washed two times with decarbonated and distilled water and finally with ethanol. The filtration cake material was then dried 12 hours at 100 °C.

*Sample C: $Ca_2Fe(OH)_6[OOC(CH_2)_8COO]_{0.5} \cdot 2 H_2O$*

12.62 g of $Ca(NO_3)_2$ and 10.80 g of $Fe(NO_3)_3$ were dissolved in decarbonated water. This solution was added drop wise into a 0.1 M solution of $HOOC(CH_2)_8COOH$ (10.81 g) under vigorous stirring. During the synthesis the temperature was maintained at 60 °C and pH at 11.50 ± 0.2 adjusted by simultaneous drop wise addition of 2 M NaOH solution. The addition of both solutions took about 1 h. The resulting suspension was then maintained at 70 °C, 1.5 hours, and then 18 hours with stirring without temperature. The product was filtered off, washed two times with decarbonated and distilled water and finally with ethanol. The filtration cake material was then dried 12 hours at 100 °C.

*Comparative Sample D: $Ca_2Fe(OH)_6(NO_3) . 2 H_2O$*

28.11 g of $Ca(NO_3)_2$ and 24.00 g of $Fe(NO_3)_3$ were dissolved in decarbonated water. This solution was added drop wise into a 0.1 M solution of $NaNO_3$ (20.19 g) under vigorous stirring. During the synthesis the temperature was maintained at 60 °C and pH at 11.50 ± 0.2 adjusted by simultaneous drop wise addition of 2 M NaOH solution. The addition of both solutions took about 1 h. The resulting suspension was then maintained at 70 °C, 1.5 hours, and then 18 hours with stirring without temperature. The product was filtered off, washed two times with decarbonated and distilled water and finally with ethanol. The filtration cake material was then dried 12 hours at 100 °C.

*Comparative Sample E: $Ca_2Al(OH)_6(NO_2) . 2 H_2O$*

32.44 g of $Ca(NO_3)_2$ and 25.75 g of $Al(NO_3)_3$ were dissolved in decarbonated water. This solution was added drop wise into a 0.1 M solution of $NaNO_2$ (18.94 g) under vigorous stirring. During the synthesis the temperature was maintained at 65 °C and pH at 11.00 ± 0.2 adjusted by simultaneous drop wise addition of 2 M NaOH solution. The addition of both solutions took about 1 h. The resulting suspension was then maintained at 70 °C, 1,5 hours, and then 18 hours with stirring without temperature. The product was filtered off, washes two times with decarbonated and distilled water and finally with ethanol. The filtration cake material was then dried 12 hours at 100 °C.

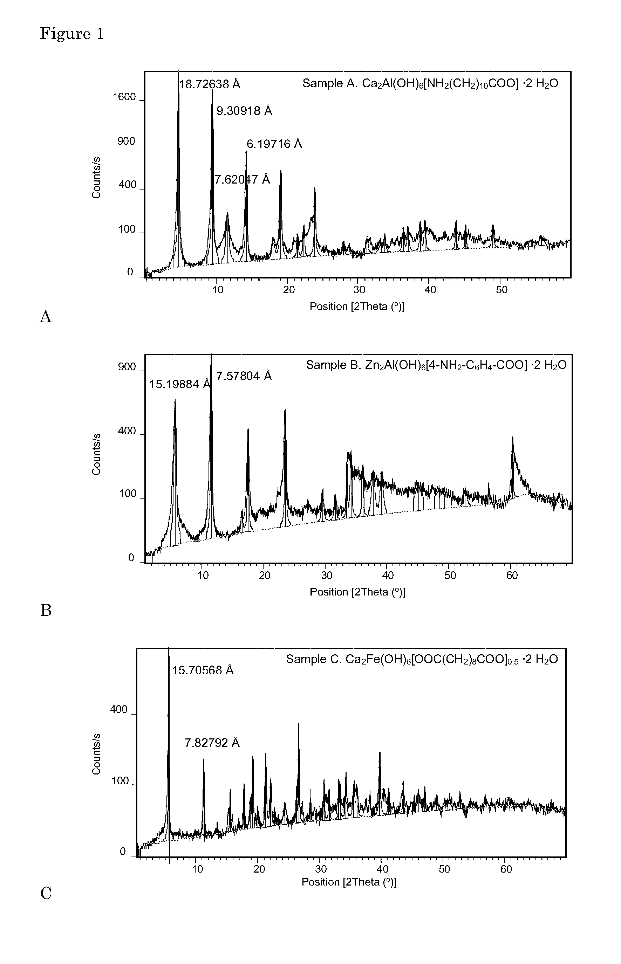

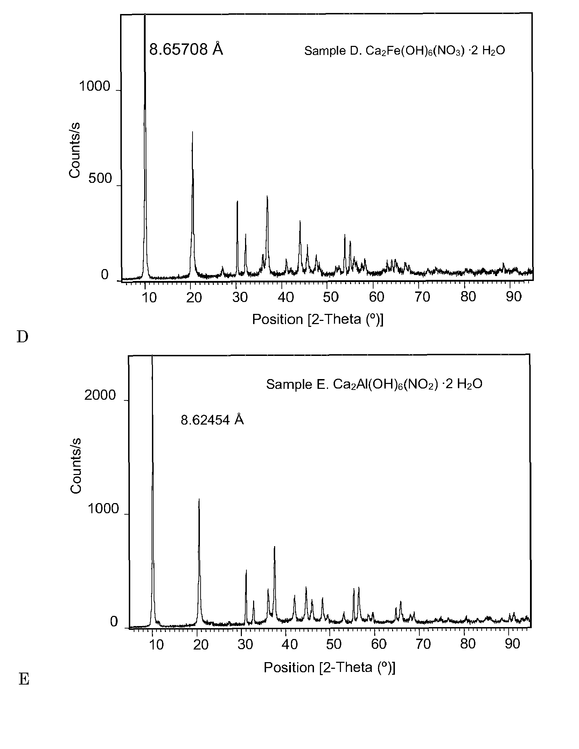

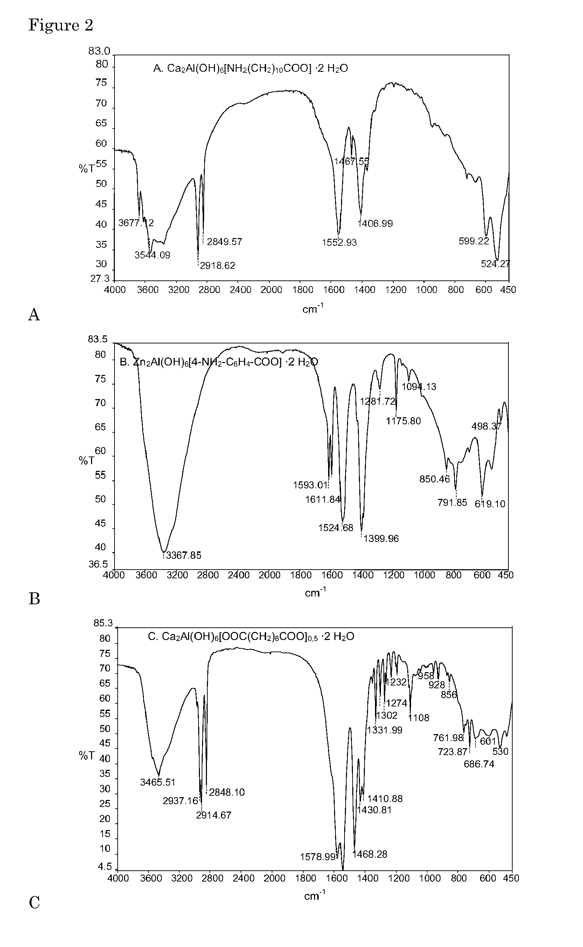

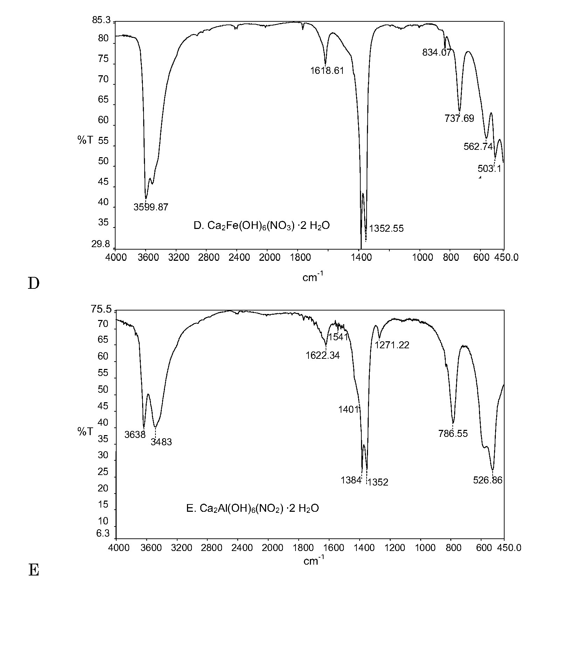

X-ray diffraction, infrared spectroscopy and thermogravimetric analysis were used to characterise the compositions. The X-ray patterns (shown in Figure 1A-E) show a typical layered structure with high crystallinity. The first reflection in the low angle region corresponds to the interlayer distance. The IR spectra (shown in Figure 2A-E) show characteristic frequencies associated with the presence with of the corresponding anions (around 1350 $cm^{-1}$ for the inorganic anions and in the range 1400-1600 $cm^{-1}$ for the organic anions). The presence of these characteristic absorption bands with the X-ray diffraction results confirms the formulations proposed.

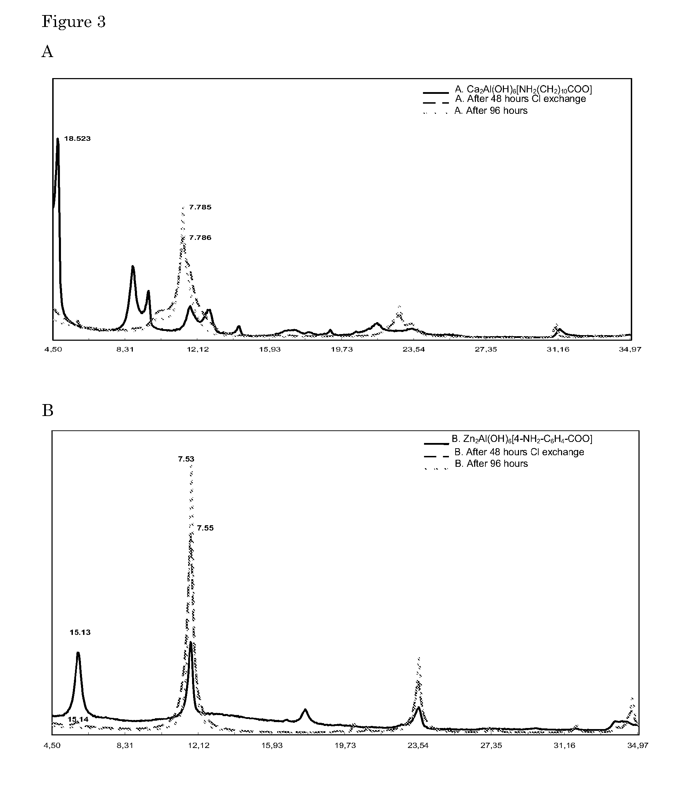

Successful anion exchange reactions with a 10 equivalents excess of chloride ion (or chloride ion uptake) were confirmed by volumetric titrations, X-ray diffraction and microanalysis on scanning electron microscopy (SEM). Volumetric titrations results show that chloride ion uptake was close to the stoichiometric uptake for all layered double hydroxides after 48 hours. Semi-quantitative results obtained by microanalysis on SEM also confirmed the chloride extraction capacity of these layered double hydroxides. The corrosion inhibitor de-intercalation process (chloride anion exchange) was observed in the X-ray diffraction patterns of sample A and B in the pictures shown in Figures 3A and 3B.

Electrochemical tests were carried out in a potentiostat galvanostat AUTOLAB. Cylindrical cement paste specimens of 5 cm diameter and 10 cm long with w/c = 0.4 were prepared. Each mortar specimen has embedded a ribbed bar of steel of 0.6 cm in diameter. Layered doubly hydroxides with corrosion inhibitor were added in a concentration of 2 wt.% weight based on dry weight cement. The specimens were partially immersed in a 5 % sodium chloride solution.

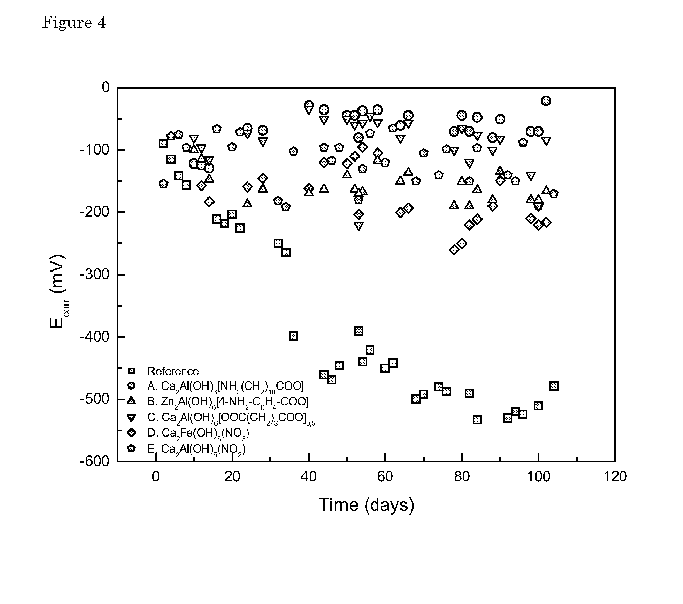

Half cell potential was conducted according ASTM C876. The potential difference between working electrode (embedded steels bars) and saturated calomel reference electrode (SCE) place in the solution was measured using a high impedance voltmeter. According to ASTM C876 potential more negative than -270 mV, with respect to SCE, indicate greater than 90 % probability of active reinforcement corrosion. Values less negative than -120 mV SCE indicate a probability of corrosion below 5 %, while those falling between -270 and -120 mV SCE indicate uncertainty of corrosion. The results are shown in Figure 4. This Figure demonstrates that the organic corrosion inhibition system of the invention (samples A, B, and C) are at least as effective as corrosion inhibition systems based on inorganic corrosion inhibitors (samples D and E). The reference in Figure 4 is $Ca_3Al(OH)_6(CO_3)_{1\cdot5} - 2\ H_2O$.

**Claims**

1. Corrosion inhibition system for concrete reinforced with a corrosion sensitive reinforcement, comprising layered double hydroxide intercalated with a compound represented by the following formula (I):

$$Y—R—COO- \qquad (I)$$

and/or protonated forms thereof, wherein
Y is $NH_2$ or COO-; and
R is an optionally substituted aromatic, aliphatic, or cycloaliphatic moiety having 5-18 carbon atoms.

2. Corrosion inhibition system according to claim 1, wherein R is a linear aliphatic moiety, preferably $(CH_2)_n$ with n being an integer in the range of 5-18, preferably 5-12..

3. Corrosion inhibition system according to claim 1 or 2, wherein said layered double hydroxide is represented by the general formula $M^{2+}{}_{1-x}M^{3+}{}_x(OH)_2\left((A^{n-})_m\right)_{\frac{x}{n\cdot m}} \cdot y\ H_2O$, wherein

$M^{2+}$ represents one or more divalent metal cations;
$M^{3+}$ represents one or more trivalent metal cations;

$\left((A^{n-})_m\right)_{\frac{x}{n\cdot m}}$ is an interlayer anion with valence n ;
m is an integer in the range of 1-000;
n is an integer in the range of 1-4;
x is a value in the range of 0.1-0.5; and
y is a is an integer in the range of 0-20.

4. Corrosion inhibition system according to any one of claims 1-3, wherein the $M^{2+}$ divalent metal cations are selected from the group consisting of $Ni^{2+}$, $Mg^{2+}$, $Mn^{2+}$, $Ca^{2+}$, $Fe^{2+}$, and $Zn^{2+}$; and wherein the $M^{3+}$ trivalent metal cations are selected from the group consisting of $Al^{3+}$, $Ga^{3+}$, $Cr^{3+}$ and $Fe^{3+}$.

5. Corrosion inhibition system according to any one of claims 1-4, wherein the molar ratio between $M^{2+}$ and $M^{3+}$ is in the range of 2-4, preferably the molar ratio between $M^{2+}$ and $M^{3+}$ is about 2.

6. Corrosion inhibition system according to any one of claims 1-5, wherein said layered double hydroxide is a hydrotalcite, preferably a hydrotalcite having $Mg(OH)_2$ brucite layers wherein part of the $Mg^{2+}$ ions are substituted with $Al^{3+}$ ions.

7. Corrosion inhibition system according to any one of claims 1-6, wherein the layered double hydroxide is intercalated with the compound represented by formula (I) at a level ranging between 1.5 and 4.5 meq/g.

8. Corrosion inhibition system according to any one of claims 1-7, wherein $((A^{n-1})_m)$ is selected from the group consisting of $CO_3{}^{2-}$, Cl-, $NO_3$-, n·m isopolyanions, heteropolyanions and carboxylates.

9. Reinforced concrete comprising a corrosion sensitive reinforcement and a corrosion inhibition system according to any one of claims 1-8.

10. Process for preparing reinforced concrete according to claim 9 comprising:

(i) applying the corrosion inhibition system according to any one of claims 1-8 onto a corrosion sensitive reinforcement and reinforcing a concrete mortar with said reinforcement; and/or
(ii) mixing the corrosion inhibition system according to any one of claims 1-8 with a concrete mortar and reinforcing said concrete mortar with reinforcement;

and

- curing the reinforced concrete mortar.

11. Process according to claim 10, wherein said corrosion sensitive reinforcement is a metal reinforcement, preferably selected from the group consisting of plate steel, steel bars, steel fibres, steel rods, steel fabric, steel wire, welted steel wire netting, welted steel fabric, and/or mesh steel reinforcement.

12. Process according to claim 10 or 11, wherein the application of intercalated layered double hydroxide onto the corrosion sensitive reinforcement comprises one or more selected from spraying, coating, and dipping.

13. Process according to claim 10 or 11, wherein the intercalated layered double hydroxide is mixed with the concrete mortar in a concentration of 0.5-20 wt.% of intercalated layered double hydroxide based on dry weight of the concrete mortar, preferably 1-5 wt.%.

14. Process according to any one of claims 10-13, wherein the concrete mortar has a water/cement ratio in the range of 0.2-0.7.

15. Use of the reinforced concrete according to claim 9 in structures exposed to seawater, or in structures exposed to de-icing salts.

Figure 1

Sample A. Ca$_2$Al(OH)$_6$[NH$_2$(CH$_2$)$_{10}$COO] ·2 H$_2$O

18.72638 Å
9.30918 Å
6.19716 Å
7.62047 Å

A

Sample B. Zn$_2$Al(OH)$_6$[4-NH$_2$-C$_6$H$_4$-COO] ·2 H$_2$O

15.19884 Å    7.57804 Å

B

Sample C. Ca$_2$Fe(OH)$_6$[OOC(CH$_2$)$_8$COO]$_{0,5}$ ·2 H$_2$O

15.70568 Å
7.82792 Å

C

D

E

Figure 2

A. $Ca_2Al(OH)_6[NH_2(CH_2)_{10}COO] \cdot 2 H_2O$

A

B. $Zn_2Al(OH)_6[4-NH_2-C_6H_4-COO] \cdot 2 H_2O$

B

C. $Ca_2Al(OH)_6[OOC(CH_2)_8COO]_{0,5} \cdot 2 H_2O$

C

D. $Ca_2Fe(OH)_6(NO_3) \cdot 2\,H_2O$

D

E. $Ca_2Al(OH)_6(NO_2) \cdot 2\,H_2O$

E

Figure 3

A

B

Figure 4

Europäisches
Patentamt

European
Patent Office

Office européen
des brevets

**EUROPEAN SEARCH REPORT**

Application Number

EP 09 17 7115

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FUDALA, A, ET AL: "Preparation and Characterization of Hybrid Organic-Inorganic Composite Materials Using the Amphoteric Property of Amino Acids: Amino Acids Intercalated Layered Double Hydroxide and Montmorillionite" INORGANIC CHEMISTRY, vol. 38, 21 September 1999 (1999-09-21), pages 4653-4658, XP002577265 * page 4653 - page 4655; figures 1 (c), (d) * | 1,3-8 | INV. C04B22/06 C04B24/12 C04B40/00 C01F7/00 |
| X | EP 1 312 582 A2 (EASTMAN KODAK CO [US]) 21 May 2003 (2003-05-21) * paragraphs [0001] - [0015], [0021] - [0027], [0040] - [0041] * | 1,2,6 | |
| X | LEI ET AL: "Selective anion-exchange intercalation of isomeric benzoate anions into the layered double hydroxide [LiAl2(OH)6]Cl.H2O" JOURNAL OF SOLID STATE CHEMISTRY, ORLANDO, FL, US LNKD-DOI:10.1016/J.JSSC.2005.09.012, vol. 178, no. 12, 1 December 2005 (2005-12-01), pages 3648-3654, XP005207009 ISSN: 0022-4596 * page 3648 - page 3654; tables 1,2 * | 1-4,6-8 | |

TECHNICAL FIELDS SEARCHED (IPC)

C04B
C01F

-/--

The present search report has been drawn up for all claims

| Place of search | Date of completion of the search | Examiner |
|---|---|---|
| The Hague | 13 April 2010 | Büscher, Olaf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 09 17 7115

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AISAWA S ET AL: "Intercalation of amino acids and oligopeptides into Zn-Al layered double hydroxide by coprecipitation reaction" JOURNAL OF PHYSICS AND CHEMISTRY OF SOLIDS, PERGAMON PRESS, LONDON, GB LNKD-DOI:10.1016/J.JPCS.2006.01.004, vol. 67, no. 5-6, 1 May 2006 (2006-05-01), pages 920-925, XP025189236 ISSN: 0022-3697 [retrieved on 2006-05-01] * page 3987 - page 3993; figure 6; table 1 * | 1,3-8 | |
| X | ----- DATABASE WPI Week 199845 Thomson Scientific, London, GB; AN 1998-525375 XP002577266 & JP 10 231157 A (KAJIMA M) 2 September 1998 (1998-09-02) * abstract * ----- | 10-15 | |

TECHNICAL FIELDS SEARCHED (IPC)

The present search report has been drawn up for all claims

| Place of search | Date of completion of the search | Examiner |
|---|---|---|
| The Hague | 13 April 2010 | Büscher, Olaf |

## ANNEX TO THE EUROPEAN SEARCH REPORT
## ON EUROPEAN PATENT APPLICATION NO.

EP 09 17 7115

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2010

| Patent document cited in search report | | Publication date | Patent family member(s) | | Publication date |
|---|---|---|---|---|---|
| EP 1312582 | A2 | 21-05-2003 | CN | 1418917 A | 21-05-2003 |
| | | | JP | 2003192335 A | 09-07-2003 |
| | | | US | 2003100656 A1 | 29-05-2003 |
| JP 10231157 | A | 02-09-1998 | JP | 3677139 B2 | 27-07-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070022916 A
- CN 1948207 A
- JP 4154648 A
- JP 9142903 A